# EUROPÄISCHE PATENTSCHRIFT

(11) **EP 3 860 404 B1**
(45) Veröffentlichungstag und Bekanntmachung des Hinweises auf die Patenterteilung: **19.02.2025**
(21) Anmeldenummer: 19794093.5
(22) Anmeldetag: 06.10.2019
(51) Int. Cl.: A47C 4/28

(54) **GESTELL, INSBESONDERE IN FORM EINES DREIBEINS**
FRAME, MORE PARTICULARLY IN THE FORM OF A TRIPOD
SUPPORT, EN PARTICULIER SOUS LA FORME D'UN TRÉPIED

(30) Priorität: 06.10.2018 DE 202018004631 U
(43) Veröffentlichungstag der Anmeldung: 11.08.2021
(73) Patentinhaber: Kaiser, Thomas, 87463 Überbach (DE); Wassermann, Christian, 87640 Ebenhofen (DE)
(72) Erfinder: Kaiser, Thomas, 87463 Überbach (DE); Wassermann, Christian, 87640 Ebenhofen (DE)
(74) Vertreter: Gille Hrabal Partnerschaftsgesellschaft mbB Patentanwälte
(86) Internationale Anmeldenummer: PCT/EP2019/000288
(87) Internationale Veröffentlichungsnummer: WO 2020/069772

(56) Entgegenhaltungen:
- DE-A1- 2 163 857
- US-A- 3 709 167
- US-A- 5 876 091
- US-A1- 2007 257 540

## Beschreibung

Die vorliegende Erfindung bezieht sich auf ein Gestell, insbesondere in Form eines Dreibeins, gemäß den oberbegrifflichen Merkmalen des Anspruchs 1.

Dreibeine (sog. Tripode) sind seit vielen Jahren bekannt, um z.B. über einem Lagerfeuer ein Grillgitter höhenverstellbar zu halten. Dreibeine werden auch bei Campingstühlen oder Outdoor-Tischen eingesetzt, da diese im Gegensatz zu Möbeln mit vier Beinen statisch nicht überbestimmt sind. Eine Version eines Dreibeins für den Grillbereich ist z. B. bei der Fa. Cathara-design.com erhältlich. Hierbei sind die Metallstangen durch einen Metallring geführt, und können so in eine platzsparende Transportstellung zusammenklappbar werden, in der die Beine weitgehend parallel ausgereichtet sind. In der Grill- oder allgemein Nutzstellung sind die Stangen auseinander geklappt, also die Beine verschränkt ausgerichtet. Dieses Gestell ist jedoch relativ instabil, da dieses durch Anstoßen an den Metallstangen leicht Umfallen kann.

Ein Dreibein mit Stangen, die durch einen Metallring hindurchgeführt sind, ist außerdem aus der Druckschrift US 2007/0257540 A1 bekannt.

Dies gilt auch für Gestelle, bei denen die (drei) Beine durch einen etwa mittig angeordneten Verbindungsblock gelagert sind. Solch eine Bauweise ist im US-Patent 4, 934,638 beschrieben, wobei am oberen Ende eine Sitzfläche aufgespannt ist, die mit den oberen Enden der dort teleskopartigen Rohre verschraubt ist. Dies ist relativ aufwändig, zumal im unbelasteten Zustand die Gefahr des unbeabsichtigten Umstoßens weiter besteht. Zudem ist ein vorzeitiger Verschleiß zu befürchten, da die Zapfen an der Dreh- bzw. Verbindungsstelle hoch belastet sind, ebenso die rohrförmigen Beine in diesem Bereich, so dass relativ dickwandige und damit schwere Stangen erforderlich scheinen.

Daher liegt der Erfindung die Aufgabe zugrunde, ein Gestell, insbesondere ein Dreibein hinsichtlich Stabilität, Sicherheit und Bauaufwand zu verbessern.

Diese Aufgabe wird gelöst mit einem Gestell gemäß den Merkmalen des Anspruchs 1.

Bevorzugte Ausführungsformen sind Gegenstand der Unteransprüche.

Durch die vorgeschlagene Bauweise erhält das Gestell, insbesondere in Form eines Dreibeins eine besonders stabile Struktur und hohe Belastbarkeit, da durch die konkaven, insbesondere an die Beinoberfläche angepassten Stützflächen die Flächenpressung erheblich reduziert werden kann und damit auch der Verschleiß bei häufiger Benutzung oder großer Last vermindert wird. Die Beine stützen sich somit über die korrespondierenden Stützflächen zueinander ab, so dass keine weiteren Verstrebungen erforderlich sind. In kinematischer Umkehrung können diese konkaven Stützflächen auch an den Beinen selbst angeordnet sein und die dazu korrespondierenden Flächen am Verbindungsteil. Allgemein wird jedoch die Ausbildung der konkaven Stützflächen am zentralen Verbindungsteil bevorzugt, da sich hierdurch ausgerundete Lagerflächen für die Beine in der zusammengeklappten Transportstellung, vorzugsweise als Metall-Gußteil einfach formen und herstellen lassen. Das zentrale Verbindungsteil kann jedoch auch als Frästeil ausgebildet sein, wobei auch radial nach außen stehende Zapfen in einem Arbeitsgang hergestellt werden können.

Das vorgeschlagene Gestell, insbesondere in Form eines Dreibeins, eignet sich für viele Anwendungsfälle mit erhöhter Anbringung von Geräten im oberen Gestellbereich über dem Verbindungsteil, z. B. für eine Grill- oder Feuerschale. Es kann dort aber auch Sitz- oder Tischfläche angeordnet sein oder ein Kübel, insbesondere ein Pflanz- oder Getränke-Kühlkübel, oder eine Kugel, insbesondere eine Lichtkugel einsetzt werden, um dort zwischen den oberen Teilen der stangenartigen Beine sicher gelagert zu sein. Diese Geräte können auch im Gestell über dem stabilen Verbindungsknoten in vorteilhafter Weise einfach verschwenkt werden, um z. B. die Wärmeabstrahlung einer Feuerschale zu verändern, wobei keine Befestigung gelöst werden braucht. Durch die zentrale Anbringung der Beine am Verbindungsteil kann das Gestell leicht in eine platzsparende Transportstellung zusammengeklappt werden, wobei die Beine weitgehend parallel zueinander ausgerichtet sind, um so kompakt gelagert zu werden. Hierbei wirkt eine der Stützflächen als Verrastung bzw. Positionierung. Für den Gebrauch, z. B. mit den vorgenannten Geräten, kann das Gestell schnell und einfach in eine stabile Nutzstellung auseinandergeklappt werden, in welcher die Beine verschränkt ausgerichtet sind. Durch die zwischen den Beinen vorgesehenen, konkav gewölbten Stützflächen (bei einem Dreibein somit sechs Stützflächen) wird eine exakte Positionierung und ein sicherer Stand des Gestells erreicht.

Erfindungsgemäß grenzen die jeweiligen zwei Stützflächen pro Bein direkt aneinander an, so dass deren Ausrundungen ineinander übergehen. Dort am Übergang kann vorzugsweise je ein Zapfen angeordnet sein, an dem die Beine sicher verschraubt sein können. Die rohrförmigen Beine sind insbesondere aus Leichtmetall (Aluminium) hergestellt und zur Erhöhung der Stabilität im Bereich des Verbindungsteils bzw. der Verbindungszapfen ausgesteift, insbesondere mit einem Metalleinsatz oder jeweils einer Buchse, die bevorzugt in Achsrichtung der Verbindungsschraube verläuft. Somit sind stabile Schraubbolzen mit einem Flachkopf in die Beine in versenkter Form von außen her einschraubbar, bevorzugt auch in die weitgehend radial verlaufenden Zapfen. Dabei kann am Schraubbolzen auch eine Feder, insbesondere Tellerfeder angeordnet sein oder die Beinwandung im Bereich der Kontaktflächen etwas nachgiebiger gestaltet sein, um den Übergang zwischen Nutz- und Transportstellung (und umgekehrt) zu erleichtern, insbesondere wenn dort zur exakten Positionierung der Beine wahlweise in der Transport- bzw. Nutzstellung eine etwas vorspringende Rastnase vorgesehen ist. Diese formschlüssige "Verrastung" zwischen den beiden Stellungen der Beine ist bevorzugt als zwickelartige Rastnase gestaltet. Wenn jedoch die Positionierung in der Transportstellung stärker betont sein soll, ist die Rastnase jeweils parallel zu den Beinen ausgerichtet oder alternativ, parallel zu der verschränktenBeinposition in Nutzstellung. In vorteilhafter Weise sind die Beine mehrteilig ausgebildet, insbesondere mit Schnell- oder Schraubverbindungen verlängerbar, um so das Packmaß des Gestells z. B. beim Versand kompakt zu halten. Zudem ist damit die Höhe des Gestells leicht veränderbar, z. B. von Tischhöhe auf Stuhlhöhe, in dem zusätzliche Stangen angeschraubt oder eingeklickt werden. Wenn z. B. am Dreibein im unteren Bereich drei Stangen je 50 cm Länge in Verlängerung vorhandener Beine angeschraubt werden, ergibt sich eine erhöhte Position z. B. beim Einsatz mit einer Leucht- oder Lichtkugel. Diese Verlängerung kann auch mit Rohren aus Kunststoff oder Holzstangen erfolgen, wobei der (mittlere) Bereich beim Verbindungsteil (ggf. mit den genannten Metalleinsätzen) aus Metall besteht, um im Zusammenwirken mit den Stützflächen die gewünschte Tragfähigkeit sicherzustellen.

Nachfolgend werden bevorzugte Ausführungen des Gestells anhand der Zeichnung beschrieben. Hierbei zeigen:
Fig. 1 ein Gestell in Form eines Dreibeins in drei Darstellungen (Fig. 1 a, 1 b und 1c);
Fig. 2 eine Draufsicht auf das Gestell in Transportstellung (gemäß Fig. 1 b);
Fig. 3 eine Perspektivansicht auf das zentrale Verbindungsteil;
Fig. 4 eine ähnliche Ansicht wie Fig. 3, mit einem weggelassenen Bein;
Fig. 5 einen Querschnitt durch ein Bein mit Verschraubung;
Fig. 6 zwei abgewandelte Ausführungen von Rastnasen am Verbindungsteil;

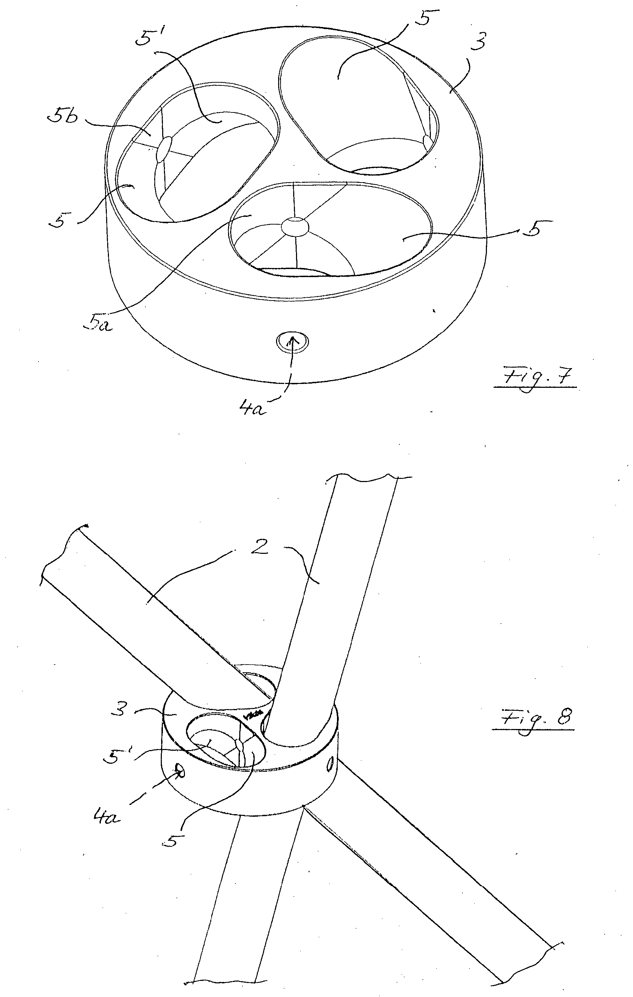

Fig. 7 ein ringförmiges Verbindungsteil (ein Beispiel, das nicht Teil der vorliegenden Erfindung ist); und
Fig. 8 ein damit aufgebautes Gestell, wobei ein Bein zur Detailansicht weggelassen ist.

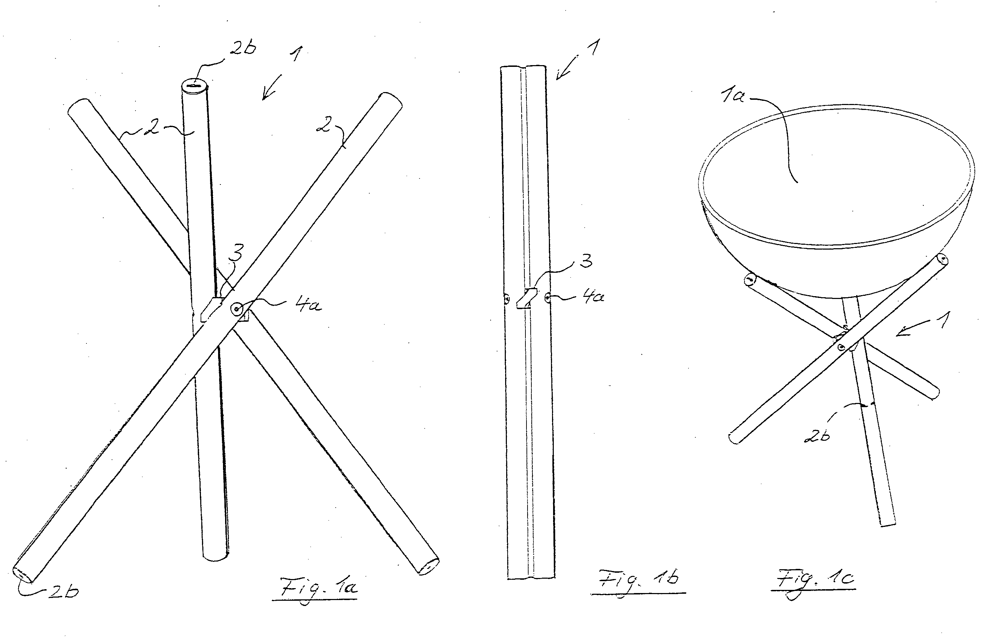

In Fig. 1 ist ein Gestell 1 in Form eines Dreibeins dargestellt, welches hier drei stangenförmige Beine 2 aufweist, die zentral an einem Verbindungsteil 3 befestigt sind. In Fig. 1a ist das Gestell 1 in einer Nutzstellung auseinandergeklappt, in der die Beine 2 in Raumrichtung verschränkt zueinander ausgerichtet sind, um z. B. eine Feuerschale 1a (vgl. Fig. 1 c) im oberen Bereich aufzunehmen. Hierbei kann die Feuerschale 1a (oder ein ähnliches Gerät, wie eine Leuchte oder ein Kübel zur Getränkekühlung etc.) auch bedarfsweise geschwenkt werden. In Fig. 1b ist das Gestell 1 in seiner platzsparenden Transportstellung gezeigt, wobei die drei Beine 2 in weitgehend paralleler Ausrichtung zusammengeklappt sind, um ggf. in kompakter Weise gestapelt zu werden. Zwei Endflächen der Beine 2 sind hier mit Bezugszeichen 2b versehen, um Schnell- oder Schraubverbindungen anzudeuten, an denen die Beine 2 bedarfsweise verlängert werden können, um z. B. die Stellhöhe zu vergrößern. So kann die Feuerschale gemäß Fig. 1c erhöht angeordnet werden. Die Schnell- oder Schraubverbindung 2b kann jedoch auch näher zum Verbindungsteil 3 hin angeordnet werden, wie in Fig. 1c in Strichlinien angedeutet. Damit können die Beine 2 insbesondere in der Transportstellung gemäß Fig. 1 b gekürzt werden, um so geringere Packabmessungen einzunehmen. Die Teil-Beine 2 können auch aus Holzstangen oder Kunststoffrohren hergestellt sein, während der Zentralbereich aus Stabilitätsgründen allgemein aus Metall gefertigt ist.

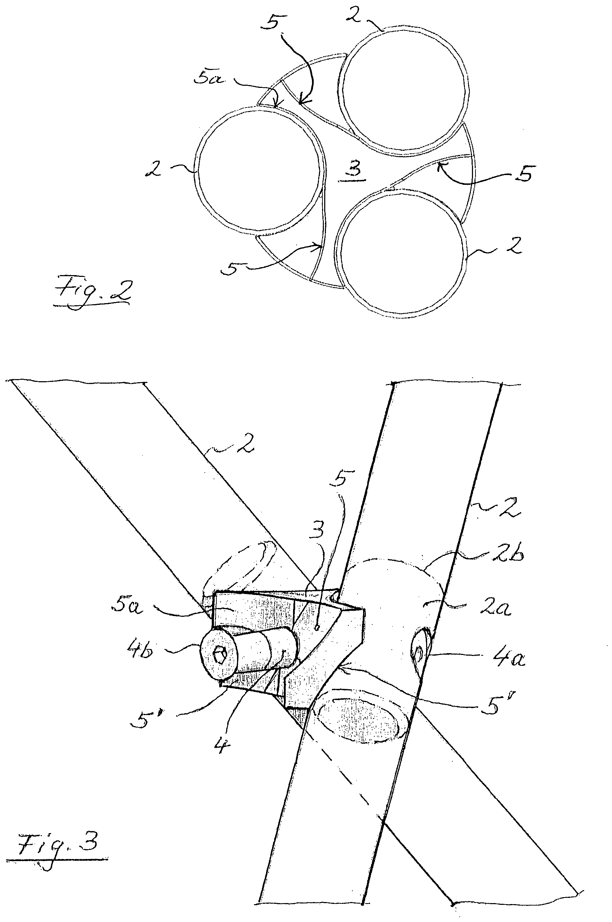

Wie in Fig. 2 dargestellt, sind am Verbindungsteil 3 bzw. den (drei) Beinen 2 jeweils zwei konkav gewölbte Stützflächen 5, 5' vorgesehen, an die sich die Außenfläche der Beine 2 in der Nutzstellung wechselweise anschmiegen kann, wobei die Flächenpressung an diesen Kontaktflächen wesentlich reduziert wird und damit das Gestell 1 hochbelastbar ist. In der hier gezeigten Transportstellung, also mit einer Draufsicht gemäß Fig. 1 b auf die Oberseite des Verbindungsteils 3, liegen die (konvexen) Außenflächen der rohrförmigen Beine 2 in einer ähnlich ausgeformten, konkaven Lagerfläche 5a an und sind dadurch positioniert. Beim Übergang in die Nutzstellung (vgl. Fig. 3) werden die Oberflächen der Beine 2 über leichte Erhöhungen in Form von Rastnasen 5b verdreht, um dann an den konkaven Stützflächen 5, 5' anzuliegen und so formschlüssig verankert zu sein. Zur Verdeutlichung wird hier nachfolgend zwischen den oberen Stützflächen 5 und den unteren Stützflächen 5' differenziert, die korrespondierend pro Bein 2 angeordnet sind.

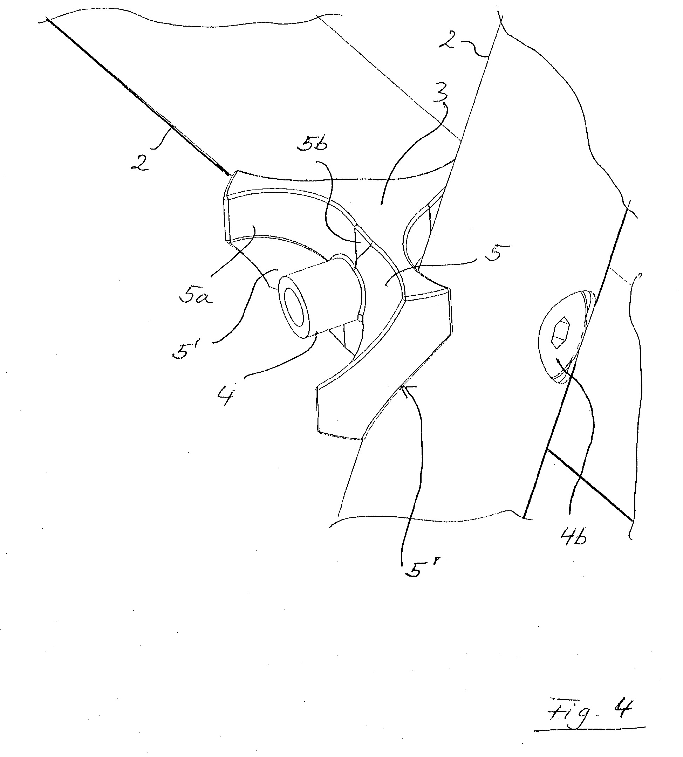

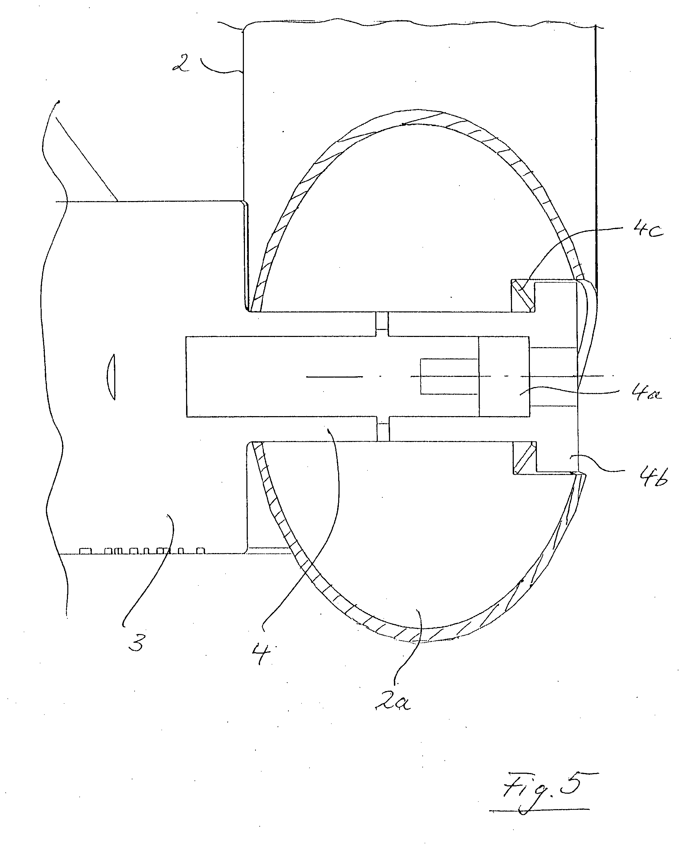

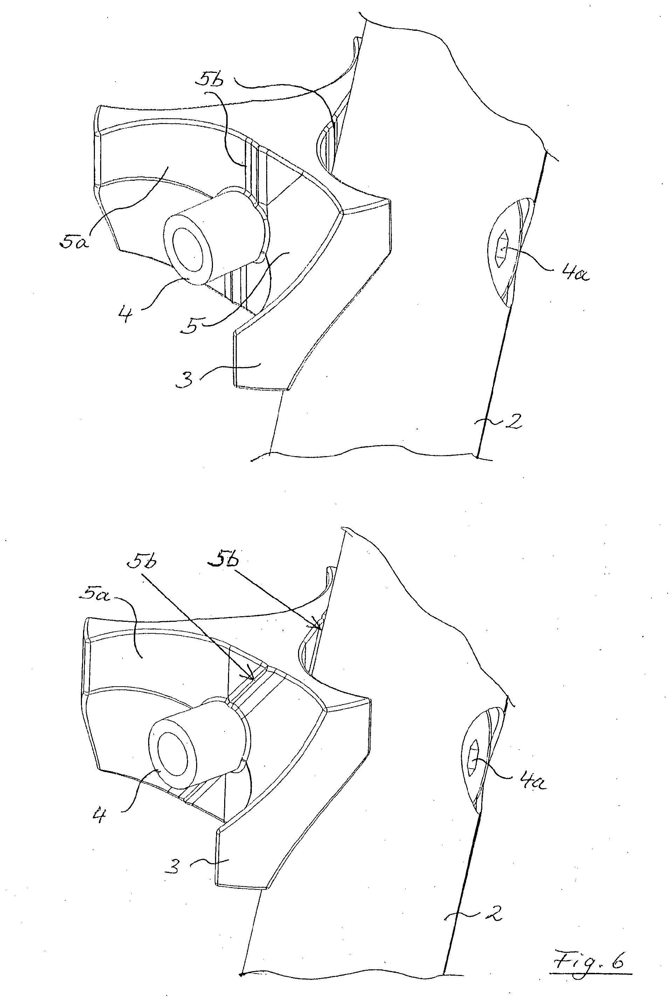

Wie in Fig. 3 gezeigt, erfolgt das Verschränken in die Nutzstellung durch Drehung der Beine 2, hier um radial ausgerichtete Zapfen 4, die jeweils zwischen den ausgerundeten Stützflächen 5 und 5' angeordnet sind, bevorzugt angrenzend an die genannten Rastnasen 5b (vgl. auch Fig. 6). Die Beine 2 (hier ist das vordere Bein zur besseren Darstellung des Zapfens 4 weggelassen) sind bevorzugt aus Leichtmetallrohren hergestellt, wie leicht schattiert gezeigt. Zur Erhöhung der Stabilität des Gestells 1 können die rohrförmigen Beine 2 im Bereich des Verbindungsteils 3 ausgesteift sein, insbesondere mit einem Metalleinsatz 2a oder eine Buchse (vgl. Fig. 5). In diese Zapfen 4 können von außen her Schraubbolzen 4a (vgl. auch Fig. 1a) mit einem Flachkopf 4b eingeschraubt werden, um so in versenkter Weise eine bündige, sichere Befestigung zu gewährleisten. Das Verbindungsteil 3 ist bevorzugt als Metall-Gußteil hergestellt, insbesondere zusammen mit radial ausgerichteten Zapfen 4 oder ähnlichen Verbindungselementen, wie in Fig. 4 in leicht veränderter Perspektive gezeigt ist.

In Fig. 4 ist auch der Übergang zwischen den jeweils konkaven Ausrundungen ersichtlich, ebenso die dazwischen befindliche Rastnase 5b, welche hier zwickelartig geformt ist, um jeweils in der Nutzstellung (Fig. 1a), aber auch in der Transportstellung (Fig. 1 b) einen "Positionieranschlag" für die dort anliegende Rohroberfläche zu bilden. Somit wird eine exakte Positionierung für die Beine 2 und passgenaue Anlage entweder an der Lagerfläche 5a oder in der (oberen) Stützfläche 5 je nach gewünschter Stellung (gemäß Fig. 1a oder Fig. 1b) erzielt. In der Nutzstellung berührt die Stangen- oder Beinoberfläche jedoch nicht nur die hier obenliegende Stützfläche 5, sondern auch die rotationssymmetrisch zur Achse des Zapfens 4 angeordnete, untere Stützfläche 5'. Hierdurch wird die Flächenpressung wesentlich verringert und die Tragfähigkeit erhöht.

In anderen Worten ausgedrückt, erstreckt - bei Ansicht in Achsrichtung auf den Zapfen 4 - die obere Stützfläche 5 analog einem Zifferblatt im Bereich von etwa 0 Uhr bis 3 Uhr und die untere Stützfläche 5' von etwa 6 Uhr bis 9 Uhr. Wie an dem mit einem Flachkopf 4b befestigten Bein 2 ersichtlich, schmiegt sich die Beinoberfläche perfekt an die korrespondierend ausgerundete Stützfläche 5' an. Es sei angemerkt, dass trotz der relativ geringen Materialstärke des Verbindungsteils 3 zwischen den beiden Stützflächen 5 und 5' eine hohe Stabilität gegeben ist, da sich die Stützkräfte an dieser Stelle (an der Stützfläche 5 weitgehend nach unten gerichtet und an der Stützfläche 5' nach oben gerichtet) praktisch aufheben.

In Fig. 5 ist ein Querschnitt durch ein rohrförmiges Bein 2 in Höhe des Verbindungsteils 3 gezeigt, wobei die Schnittfläche durch die geneigte Ausrichtung des Beins (entsprechend Fig. 1a) ellipsenförmig erscheint. Es sei angemerkt, dass der Beinquerschnitt nicht auf eine Zylinderform beschränkt ist, sondern z. B auch elliptisch oder Polygon sein kann, wobei dann die Ausformung der Stützflächen 5, 5' entsprechend angepasst ist. Zur axial etwas nachgiebigen Befestigung ist hier zwischen dem Zapfen 4 und dem Schraubbolzen 4a eine Feder 4c (insbesondere eine Tellerfeder) angeordnet, so dass die Außenfläche des Beins 2 beim Übergang zwischen Lagerfläche 5a und Stützfläche 5 (bzw. umgekehrt) leichtgängiger über die Rastnase 5b gleitet. Dies kann auch durch einen segmentartigen Metalleinsatz 2a gelöst werden, so dass sich eine gewisse Rohrverformung ergibt. Ebenso könnte der Materialquerschnitt zur Rastnase hin geschwächt werden, z. B. durch eine geschliffene Abflachung, welche die Biegefestigkeit des Beins 2 und die flächige Anlage an den Stützflächen 5, 5' nicht beeinträchtigt. Obwohl hier die konkaven Stützflächen 5, 5' je am Verbindungsteil 3 gezeigt ist, um mit der konvexen Außenfläche des jeweiligen Beins 2 zusammenzuwirken, können - in kinematischer Umkehrung- die Stützflächen auch jeweils an den Beinen 2 ausgebildet sein, wobei dann die korrespondierend angepasste Konvexform am Verbindungsteil 3 geformt wäre.

In Fig. 6 sind zwei Alternativen zu der vorstehend beschriebenen Zwickelform der Rastnase 5b zwischen den Stützflächen 5 und 5a gezeigt. So ist in der oberen Darstellung die Rastnase 5b jeweils parallel zu den Beinen 3 in Transportstellung (vgl. Fig. 1 b) ausgerichtet, während im unteren Zeichnungsteil die Ausrichtung parallel zu den Beinen 3 in Nutzstellung (Fig. 1a oder 1c) ausgelegt ist.

In der vorstehenden Ausführungsform gemäß den Fig. 1 bis 6 ist das zentrale Verbindungsteil 3 radial nach außen offen gestaltet, so dass die Beine 2 besonders einfach montiert werden können, also nicht wie bei Ringen eingefädelt werden müssen. Zudem bietet diese offene Bauweise eine ansprechende Optik (vgl. Fig. 1 a-1c), da das zentrale Verbindungsteil 3 kaum sichtbar ist. Zudem bietet die offene, sternförmige Gestaltung gegenüber einer Ringform wesentliche Vorteile bei der Herstellung. So können die Stützflächen 5, 5' hochgenau auf einem CNC-Fräszentrum bearbeitet werden, insbesondere zusammen mit den Zapfen 4 in einem Arbeitsgang. Dabei können auch Schleifköpfe mit radialer Zustellung (Vorschub von außen her) eingesetzt werden, um die Stützflächen 5, 5' im Sinne einer optimierten Anlage ("Anschmiegung") und damit geringen Flächenpressung hochgenau zu fertigen, was bei Ringformen mit schlechter Zugänglichkeit kaum möglich ist.

## Patentansprüche

1. Gestell, insbesondere in Form eines Dreibeins, mit mehreren, stangenartigen Beinen (2), die zentral an einem radial
nach außen offen gestaltetem Verbindungsteil (3) befestigt sind, so dass die Beine (2) nicht wie bei Ringen eingefädelt werden müssen, wobei das Gestell in eine platzsparende Transportstellung zusammenklappbar ist, in der die Beine (2) weitgehend parallel ausgerichtet sind, sowie das Gestell in eine Nutzstellung auseinander klappbar ist, in welcher die Beine (2) verschränkt ausgerichtet sind,
**dadurch gekennzeichnet, dass**
zwischen den Beinen (2) zwei konkav ausgerundete Stützflächen (5, 5') pro Bein zur flächigen Stützung der Beinoberfläche angeordnet sind, welche die jeweilige Beinoberfläche in Nutzstellung einander gegenüberliegend flächig berühren.

2. Gestell nach Anspruch 1, **dadurch gekennzeichnet, dass** die Stützflächen (5, 5') jeweils am Verbindungsteil (3) ausgebildet ist.

3. Gestell nach Anspruch 1, **dadurch gekennzeichnet, dass** die Stützflächen (5, 5') jeweils an den Beinen (2) ausgebildet ist.

4. Gestell nach einem der Ansprüche 1 bis 3, **dadurch gekennzeichnet, dass** die Stützflächen (5, 5') aneinander angrenzen.

5. Gestell nach einem der Ansprüche 1 bis 4, **dadurch gekennzeichnet, dass** zwischen den Stützflächen (5, 5') jeweils ein Zapfen (4) angeordnet ist, der bevorzugt radial ausgerichtet ist.

6. Gestell nach einem der Ansprüche 1 bis 5, **dadurch gekennzeichnet, dass** mehrere rohrförmige Beine (2), insbesondere aus Leichtmetall am Verbindungsteil (3) angeordnet sind.

7. Gestell nach einem der Ansprüche 1 bis 6, **dadurch gekennzeichnet, dass** die Beine (2) im Bereich des Verbindungsteils (3) ausgesteift sind, insbesondere mit einem Metalleinsatz (2a), einer Buchse oder einem Zwischenstück.

8. Gestell nach einem der Ansprüche 1 bis 7, **dadurch gekennzeichnet, dass** in die Beine (2) von außen her Schraubbolzen (4a) einschraubbar sind, insbesondere mit einem Flachkopf (4b) in weitgehend bündiger Anordnung.

9. Gestell nach Anspruch 8, **dadurch gekennzeichnet, dass** am Schraubbolzen (4a) eine Feder (4c), insbesondere Tellerfeder angeordnet ist.

10. Gestell nach einem der Ansprüche 1 bis 9, **dadurch gekennzeichnet, dass** das Verbindungsteil (3) als Metall-Gußteil geformt ist.

11. Gestell nach einem der Ansprüche 1 bis 10, **dadurch gekennzeichnet, dass** im oberen Teil über dem Verbindungsteil (3) eine Grill- oder Feuerschale (1a) einsetzbar ist, oder im oberen Teil eine Sitz- oder Tischfläche oder ein Kübel, insbesondere ein Pflanz- oder Getränke- Kühlkübel, oder eine Leuchte, insbesondere eine Lichtkugel angeordnet ist.

12. Gestell nach einem der Ansprüche 1 bis 11, **dadurch gekennzeichnet, dass** zwischen den Stützflächen (5, 5') und einer Lagerfläche (5a) eine Rastnase (5b) ausgebildet ist, die bevorzugt zwickelartig geformt ist oder jeweils parallel zu den Beinen (2) in Transportstellung (Fig. 1 b) oder jeweils parallel zu den Beinen (3) in Nutzstellung (Fig. 1 a) ausgerichtet ist.

13. Gestell nach einem der Ansprüche 1 bis 11, **dadurch gekennzeichnet, dass** die Beine (2) mehrteilig ausgebildet sind, insbesondere mit Schnell- oder Schraubverbindungen (2b) verlängerbar sind.

14. Gestell nach einem der Ansprüche 1 bis 11, **dadurch gekennzeichnet, dass** die Beinoberfläche unterschiedliche Druckfestigkeit aufweist, insbesondere zum Zentrum des Verbindungsteils (3) hin nachgiebiger gestaltet ist.

## Claims

1. Frame, in particular in the form of a tripod, having a plurality of rod-like legs (2) which are fastened centrally to a connecting part (3) which is designed to be open radially outwards, so that the legs (2) do not have to be threaded in as in the case of rings, wherein the frame can be folded into a space-saving transport position in which the legs (2) are aligned largely parallel, and the frame can be folded apart into a use position in which the legs (2) are aligned in a crossed manner,
**characterized in that**
two concave support surfaces (5, 5') per leg are arranged between the legs (2) for surface support of the leg surface, which contact a surface of the respective leg surface opposite one another in the use position.

2. Frame according to claim 1, **characterized in that** the support surfaces (5, 5') are each formed on the connecting part (3).

3. Frame according to claim 1, **characterized in that** the support surfaces (5, 5') are each formed on the legs (2).

4. Frame according to one of claims 1 to 3, **characterized in that** the support surfaces (5, 5') adjoin one another.

5. Frame according to one of claims 1 to 4, **characterized in that** a pin (4) is arranged between the respective supporting surfaces (5, 5'), which is preferably radially aligned.

6. Frame according to one of claims 1 to 5, **characterized in that** a plurality of tubular legs (2), in particular made of light metal, are arranged on the connecting part (3).

7. Frame according to one of claims 1 to 6, **characterized in that** the legs (2) are stiffened in the region of the connecting part (3), in particular by means of a metal insert (2a), a bushing or an intermediate piece.

8. Frame according to one of claims 1 to 7, **characterized in that** screw bolts (4a) can be screwed into the legs (2) from the outside, in particular with a flat head (4b) in a largely flush arrangement.

9. Frame according to claim 8, **characterized in that** a spring (4c), in particular a disc spring, is arranged on the screw bolt (4a).

10. Frame according to one of claims 1 to 9, **characterized in that** the connecting part (3) is formed as a cast metal part.

11. Frame according to one of claims 1 to 10, **characterized in that** a grill or fire bowl (1a) can be inserted in the upper part above the connecting part (3), or a seat or table surface or a bucket, in particular a planter or beverage cooling bucket, or a light, in particular a light sphere, is arranged in the upper part.

12. Frame according to one of claims 1 to 11, **characterized in that** a locking lug (5b) is formed between the support surfaces (5, 5') and a bearing surface (5a), which is preferably shaped like a gusset or is aligned in each case parallel to the legs (2) in the transport position (Fig. 1 b) or in each case parallel to the legs (3) in the use position (Fig. 1 a).

13. Frame according to one of claims 1 to 11, **characterized in that** the legs (2) are designed in several parts, in particular can be extended with quick or screw connections (2b).

14. Frame according to one of claims 1 to 11, **characterized in that** the leg surface has different compressive strength, in particular is designed to be more flexible towards the center of the connecting part (3).

## Revendications

1. Râtelier, en particulier sous la forme d'un trépied, avec plusieurs jambes (2) en forme de tige, qui sont fixées de manière centrale à une pièce de liaison (3) conçue de manière ouverte radialement vers l'extérieur, de sorte que les jambes (2) ne doivent pas être enfilées comme pour des anneaux, dans lequel le râtelier peut être replié dans une position de transport peu encombrante, dans laquelle les jambes (2) sont orientées de manière largement parallèle, ainsi que le râtelier peut être déplié dans une position d'utilisation, dans laquelle les jambes (2) sont orientées de manière entrelacée,
**caractérisé en ce que**
entre les jambes (2) sont disposées deux surfaces d'appui (5, 5') arrondies de manière concave par jambe pour l'appui à plat de la surface de jambe, qui, en position d'utilisation, touchent à plat de manière opposée l'une à l'autre la surface de jambe respective.

2. Râtelier selon la revendication 1, **caractérisé en ce que** les surfaces d'appui (5, 5') sont formées respectivement à la pièce de liaison (3).

3. Râtelier selon la revendication 1, **caractérisé en ce que** les surfaces d'appui (5, 5') sont formées respectivement aux jambes (2).

4. Râtelier selon l'une des revendications 1 à 3, **caractérisé en ce que** les surfaces d'appui (5, 5') sont adjacentes l'une à l'autre.

5. Râtelier selon l'une des revendications 1 à 4, **caractérisé en ce qu'**entre les surfaces d'appui (5, 5') est disposé respectivement un tourillon (4) qui est de préférence orienté radialement.

6. Râtelier selon l'une des revendications 1 à 5, **caractérisé en ce que** plusieurs jambes tubulaires (2), en particulier en métal léger, sont disposées à la pièce de liaison (3).

7. Râtelier selon l'une des revendications 1 à 6, **caractérisé en ce que** les jambes (2) sont raidies au niveau de la pièce de liaison (3), en particulier par un insert métallique (2a), une douille ou une pièce intermédiaire.

8. Râtelier selon l'une des revendications 1 à 7, **caractérisé en ce que** des boulons filetés (4a) peuvent être vissés dans les jambes (2) depuis l'extérieur, en particulier avec une tête plate (4b) dans une disposition largement affleurante.

9. Râtelier selon la revendication 8, **caractérisé en ce qu'**un ressort (4c), en particulier une rondelle-ressort, est disposé au boulon fileté (4a).

10. Râtelier selon l'une des revendications 1 à 9, **caractérisé en ce que** la pièce de liaison (3) est formée comme une pièce coulée en métal.

11. Râtelier selon l'une des revendications 1 à 10, **caractérisé en ce que** dans la partie supérieure, au-dessus de la pièce de liaison (3), un gril ou une vasque à feu (1a) peut être inséré, ou un siège, une table ou un seau, en particulier un seau à plantes ou un seau réfrigéré pour boissons, ou un luminaire, en particulier une boule lumineuse, est disposé dans la partie supérieure.

12. Râtelier selon l'une des revendications 1 à 11, **caractérisé en ce qu'**entre les surfaces d'appui (5, 5') et une surface de stockage (5a) un ergot d'encliquetage (5b) est formé qui a de préférence une forme de gousset ou qui est orienté respectivement parallèlement aux jambes (2) en position de transport (Fig. 1 b) ou respectivement parallèlement aux jambes (3) en position d'utilisation (Fig. 1 a).

13. Râtelier selon l'une des revendications 1 à 11, **caractérisé en ce que** les jambes (2) sont formées de plusieurs parties, en particulier peuvent être rallongées avec des liaisons rapides ou vissées (2b).

14. Râtelier selon l'une des revendications 1 à 11, **caractérisé en ce que** la surface de jambe présente une résistance à la pression différente, en particulier est conçue de manière plus souple vers le centre de la pièce de liaison (3).
